# EUROPEAN PATENT APPLICATION

(11) **EP 4 227 856 A1**
(43) Date of publication of application: **16.08.2023**
(21) Application number: 23153909.9
(22) Date of filing: 30.01.2023
(51) Int. Cl.: G06N 3/0464, G06N 3/09, G06N 3/088, G06N 7/01

(54) **SYSTEM AND METHOD FOR DEFECT DETECTION**

(30) Priority: 14.02.2022 US 202263310000 P; 21.04.2022 US 202217726024
(71) Applicant: Samsung Display Co., Ltd., Yongin-si, Gyeonggi-do 17113 (KR)
(72) Inventor: CHENG, Qisen, San Jose, 95134 (US); QU, Shuhui, San Jose, 95134 (US); LEE, Janghwan, San Jose, 95134 (US)
(74) Representative: Marks & Clerk LLP

(57) **Abstract**

A system and method for defect detection. The method may include training, with a first set of images, a first neural network including a first student neural network, and a first teacher neural network. The training of the first neural network may include introducing defects into a first subset of the first set of images, and training the first student neural network with the first set of images. The training of the first student neural network may include using a first objective function, that: for an image of the first set and not of the first subset, rewards similarity between a feature map of the first student neural network and a feature map of the first teacher neural network, and for an image of the first subset, rewards dissimilarity between a feature map of the first student neural network and a feature map of the first teacher neural network.

## Description

### FIELD

One or more aspects of embodiments according to the present disclosure relate to manufacturing processes, and more particularly to a system and method for defect detection, e.g., in a manufacturing process.

### BACKGROUND

In manufacturing processes, defect detection by machine learning-based systems may be challenging. For example in circumstances in which defects are rare, the paucity of samples with defects may be an obstacle to the assembling of a labeled training set for performing supervised training. Moreover, to the extent defective samples, or images of defective articles, are available, it may be more advantageous to reserve them for verification than to use them for training.

It is with respect to this general technical environment that aspects of the present disclosure are related.

### SUMMARY

According to an embodiment of the present disclosure, there is provided a method, including: training a first neural network with a first set of images, wherein: the first neural network includes: a first student neural network, and a first teacher neural network; the training of the first neural network with the first set of images includes: introducing defects into a first subset of the first set of images, and training the first student neural network with the first set of images; the training of the first student neural network includes training the first student neural network with a first objective function (e.g. cost function), that: for an image of the first set and not of the first subset, rewards similarity between a feature map of the first student neural network and a feature map of the first teacher neural network, and for an image of the first subset, rewards dissimilarity between a feature map of the first student neural network and a feature map of the first teacher neural network.

In some embodiments, the method further includes training the first teacher neural network with a second set of images and a second objective function, wherein: the second set of images includes images each labeled with a classification label; and the second objective function rewards, for each image, similarity between a classification generated by the first teacher neural network and the classification label of the image.

In some embodiments, the first neural network further includes: a second student neural network, and a second teacher neural network.

In some embodiments, the method further includes training the second teacher neural network with a third set of images and a third objective function, wherein: the third set of images includes masked generic images; and the third objective function rewards, for each masked generic image, similarity between an output image generated by the second teacher neural network and an original generic image corresponding to the masked generic image.

In some embodiments, the method further includes training the second teacher neural network with a third set of images and a third objective function, wherein: the third set of images includes reduced-resolution generic images; and the third objective function rewards, for each reduced-resolution generic image, similarity between an output image generated by the second teacher neural network and a full-resolution image corresponding to the reduced-resolution generic image.

In some embodiments, the first neural network further includes: a third student neural network, and a third teacher neural network.

In some embodiments, the method further includes training the third teacher neural network with a fourth set of images and a fourth objective function, wherein: the fourth set of images includes masked generic images; and the fourth objective function rewards, for each masked generic image, similarity between an output image generated by the third teacher neural network and an original generic image corresponding to the masked generic image.

In some embodiments, the method further includes training the second student neural network with the first set of images and the first objective function.

In some embodiments, the method further includes training the third student neural network with the first set of images and the first objective function.

In some embodiments, a first image of the first subset includes a first portion, processed by a reconstruction neural network.

In some embodiments, the method further includes generating the first portion, the generating of the first portion including: masking out a portion of a normal image to form a masked image; and feeding the masked image to the reconstruction neural network, to form the first portion as an output of the reconstruction neural network.

In some embodiments, the first image further includes a second portion, processed by a super-resolution neural network.

In some embodiments, the method further includes generating the second portion, the generating of the second portion including: adding noise to a portion of a normal image to form a noisy image; and feeding the noisy image to the super-resolution neural network, to form the second portion as an output of the super-resolution neural network.

In some embodiments: the first image further includes: a third portion, processed by a super-resolution neural network, and a fourth portion, processed by a reconstruction neural network; the third portion is diagonally opposed to the second portion; and the fourth portion is diagonally opposed to the first portion.

In some embodiments, the method further includes: classifying, by the first neural network, a product image of an article in a manufacturing process as including a defect; and removing the article from the manufacturing process. That is, the method may further include determining, based on an output from the first neural network, a classification as to whether a product image of an article in a manufacturing process includes a defect and, in response to the classification indicating that the product image of the article in the manufacturing process includes a defect, removing the article from the manufacturing process. This removal from the manufacturing process may be performed in an autonomous manner (e.g., without the participation of a human operator), e.g., by a processing circuit. The article may be removed from the manufacturing process by issuing one or more alerts or commands to identify the article as defective. The one or more alerts or commands may be issued to a manufacturing system configured to implement at least a portion of the manufacturing process to instruct the manufacturing system to automatically remove the defective article from the manufacturing process (e.g. by discarding the defective article).

In some embodiments, the classifying of the product image as including a defect includes: feeding the product image to the first student neural network and to the first teacher neural network; and determining that a measure of the difference between a latent feature vector of the first student neural network and a corresponding latent feature vector of the first teacher neural network exceeds a threshold.

In some embodiments, the measure of the difference is an L2 norm of the difference.

In some embodiments, the product image is an image of a display panel in a manufacturing flow.

According to an embodiment of the present disclosure, there is provided a system including: a processing circuit configured to train a first neural network with a first set of images, wherein: the first neural network includes: a first student neural network, and a first teacher neural network; the training of the first neural network with the first set of images includes: introducing defects into a first subset of the first set of images, and training the first student neural network with the first set of images; the training of the first student neural network includes training the first student neural network with a first objective function, that: for an image of the first set and not of the first subset, rewards similarity between a feature map of the first student neural network and a feature map of the first teacher neural network, and for an image of the first subset, rewards dissimilarity between a feature map of the first student neural network and a feature map of the first teacher neural network.

According to an embodiment of the present disclosure, there is provided a system including: means for processing configured to train a first neural network with a first set of images, wherein: the first neural network includes: a first student neural network, and a first teacher neural network; the training of the first neural network with the first set of images includes: introducing defects into a first subset of the first set of images, and training the first student neural network with the first set of images; the training of the first student neural network includes training the first student neural network with a first objective function, that: for an image of the first set and not of the first subset, rewards similarity between a feature map of the first student neural network and a feature map of the first teacher neural network, and for an image of the first subset, rewards dissimilarity between a feature map of the first student neural network and a feature map of the first teacher neural network.

At least some of the above and other features of the invention are set out in the claims.

### BRIEF DESCRIPTION OF THE DRAWINGS

These and other features and advantages of the present disclosure will be appreciated and understood with reference to the specification, claims, and appended drawings wherein:
FIG. 1 is a block diagram of a student teacher neural network, according to an embodiment of the present disclosure;
FIG. 2A is a system block diagram of a neural network configuration during training, according to an embodiment of the present disclosure;
FIG. 2B is a system block diagram of a neural network configuration during training, according to an embodiment of the present disclosure;
FIG. 3A is a block diagram of a neural network which may be used in a classification student teacher neural network, according to an embodiment of the present disclosure;
FIG. 3B is a block diagram of a neural network which may be used in a reconstruction student teacher neural network, according to an embodiment of the present disclosure;
FIG. 3C is a block diagram of a neural network which may be used in a super-resolution student teacher neural network, according to an embodiment of the present disclosure;
FIG. 4 is an image layout diagram illustrating a system and method for introducing defects into an image, according to an embodiment of the present disclosure;
FIG. 5 is a system block diagram illustrating a neural network used to classify images, according to an embodiment of the present disclosure; and
FIG. 6 is a flowchart of a method, according to an embodiment of the present disclosure.

### DETAILED DESCRIPTION

The detailed description set forth below in connection with the appended drawings is intended as a description of embodiments of a system and method for defect detection provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

In manufacturing processes, defect detection by machine learning-based systems may be challenging, for example in circumstances in which defects are rare, which may be an obstacle to the assembling of a labeled training set for performing supervised training. In some embodiments, training of a machine learning system without the use of samples based on defective products is performed, as discussed in further detail herein.

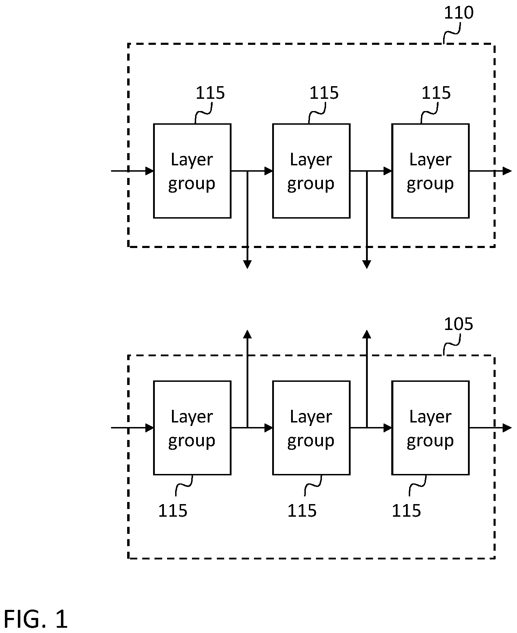

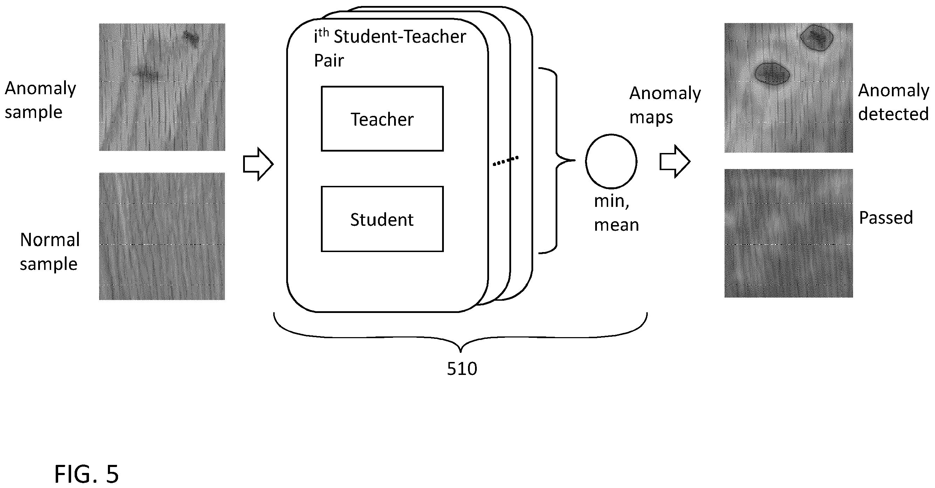

In some embodiments, a method for defect-detection in an image of a product (or "product image ", e.g., a photograph of a board or a display panel) may include feeding the product image to one or more student teacher neural networks (discussed in further detail below), and classifying an image as (i) including a defect or (ii) not including any defects. When the product image is an image of an article in a manufacturing process, the determination that the product image includes a defect may result in the article being removed from the manufacturing process (e.g., to be scrapped or reworked). This removal from the manufacturing process may be performed in an autonomous manner (e.g., without the participation of a human operator), e.g., by a processing circuit (discussed in further detail below). Referring to FIG. 1, a student teacher neural network may include a student neural network 105 and a teacher neural network 110. As used herein a "neural network" means an artificial neural network which includes a plurality of interconnected neurons. As such, a neural network may include other neural networks (as in the example of the neural network of FIG. 1, which includes the student neural network 105 and a teacher neural network 110). Similarly, the neural network for defect detection 510 (FIG. 5, discussed in further detail below) may include a plurality of student teacher neural networks. Each of the student neural network 105 and the teacher neural network 110 may include one or more layer groups 115, each of which may include one or more layers of artificial neurons. The outputs of the layer groups 115 that are not the final outputs of the neural networks may be referred to as "latent variables", "latent features", or "latent feature vectors" (as discussed in further detail below).

The training of the student teacher neural network of FIG. 1 may proceed as follows. First, the teacher neural network 110 may be trained to perform image classification, using supervised training, with a set of images (generic images), each labeled with a respective classification. These generic images may be arbitrary different everyday images, each labeled with a respective classifying label (including, for example, an image of a tree, with the label "tree", an image of a flower with the label "flower", an image of a hammer with the label "hammer", and an image of a waterfall, with the label "waterfall"). Accordingly, the generic images need not be of any particular object (e.g. need not be of a particular product). Accordingly, the generic images may be images that are not of the product or type of product being assessed. The objective function used to train the teacher neural network 110 may be one that rewards correct classification of an image. As used herein, an objective function may be a cost function or a reward function. As used herein, a cost function that "rewards" a certain outcome is one that assigns a lower cost to that outcome than to other outcomes, and that, as such, when used in training, causes the behavior of the neural network to change so that it is more likely to produce the outcome. Similarly, a reward function that "rewards" a certain outcome is one that assigns a higher reward to that outcome than to other outcomes, and that, as such, when used in training, causes the behavior of the neural network to change so that it is more likely to produce the outcome. A neural network may be trained using an objective function by adjusting parameters of the neural network to optimize an output of the objective function (e.g. minimize the cost or maximize the reward).

Once the teacher neural network 110 has been trained, the student neural network 105 may be trained by feeding a set of training images to the student neural network 105 and to the teacher neural network 110, each of the training images being either a "normal" image (an image of a product that is, or is believed to be, free of defects), or an image including simulated defects (discussed in further detail below). For example, each training image may be an image of a respective board (as explained in the example discussed below); some of the boards in the images may include defects, and some may be defect-free. The objective function used to train the student neural network 105 in this second phase of the training of the student teacher neural network may be an objective function that (i) when the training image is a normal image, rewards similarity between latent variables of the student neural network and corresponding latent variables of the teacher neural network, and (ii) when the training image is an image including simulated defects, rewards dissimilarity between latent variables of the student neural network and the corresponding latent variables of the teacher neural network. The neural network may be trained using a suitable algorithm (e.g., backpropagation) to adjust the weights so as to optimize the objective function (e.g. minimize the total (or average) of a cost function or maximize the total (or average)_of a reward function when the entire set of images (normal images and images including simulated defects) is processed). This similarity or dissimilarity may be measured, for each of the training images, for example, using an L2 norm of the difference between (i) the latent feature vector of the student neural network 105 for the training image and (ii) the latent feature vector of the teacher neural network 110 for the training image. For instance, a similarity value (e.g. an L2 norm of the difference) may be calculated for each corresponding pair of latent feature vectors output (by each corresponding pair of layer groups) of the student and teacher neural networks. The objective function may be a function of reward the overall similarity (across all layer groups). The objective function may take each similarity value as an input, and/or may be based on an average, accumulation, or aggregation, of the similarity values. As described herein, an L2 (or L²) norm of a vector coordinate calculates the distance to the vector coordinate from the origin. The L2 norm may be calculated by calculating the square root of the sum of the squared vector values. Each latent feature vector may be a vector of output values of internal, or "hidden", layers of the neural network. For example, for any pixel of the input image, an n-element latent feature vector may be formed from the output values, of the neuron corresponding to the pixel, in each of n internal layers of the neural network.

When used for inference, the student teacher neural network may be fed the product image, and each pixel of the image may be assigned, by the student teacher neural network, a likelihood value, the likelihood value being a measure of the likelihood that the pixel corresponds to the location of a defect in the product. The likelihood value may be calculated, for example, as a norm (e.g., as the L2 norm) of the differences, per layer group, of (i) the latent variable or variables at the output of the layer group of the teacher neural network 110 and (ii) the latent variable or variables at the output of the corresponding layer group of the student neural network 105. The circuit or software, for performing such calculations based on the latent variables and output variables, may be considered to be part of the student teacher neural network.

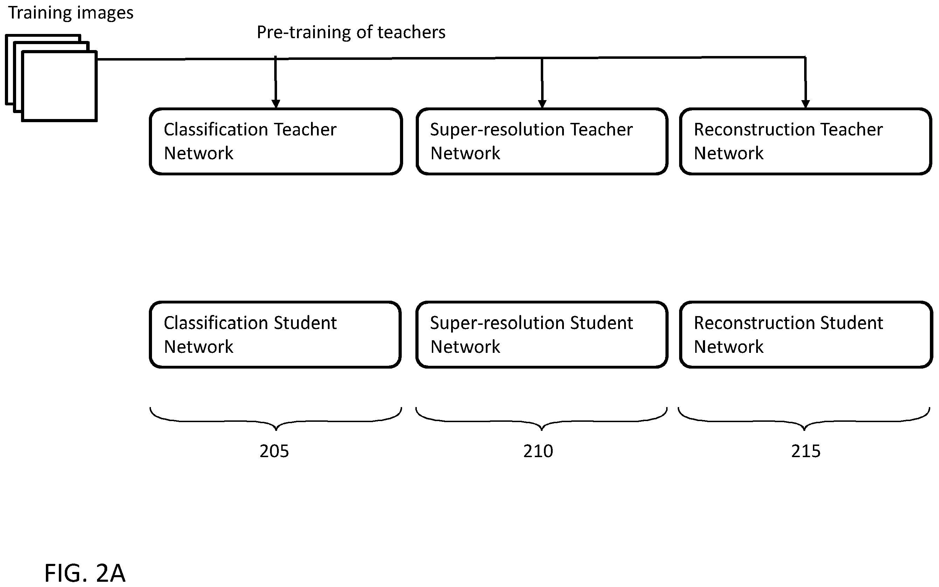

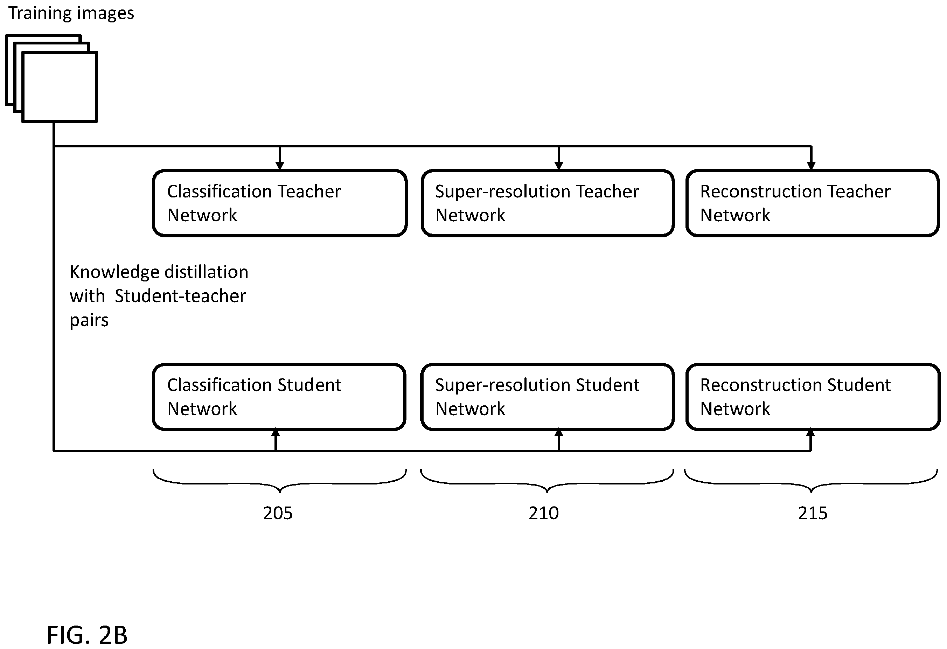

Referring to FIGs. 2A and 2B, in some embodiments several (e.g., two or three) different student teacher neural networks may be combined to perform the detection of defects. For example, as illustrated, a defect-identifying neural network may include a first student teacher neural network, referred to as a classification student teacher neural network 205 (or simply as a "classification neural network"), a second student teacher neural network, referred to as a super-resolution student teacher neural network 210 (or simply as a "super-resolution neural network"), and a third student teacher neural network, referred to as a reconstruction student teacher neural network 215 (or simply as a "reconstruction neural network"). FIG. 2A shows the training of the teacher networks (e.g., with generic training images, as described above), and FIG. 2B shows the training of the student networks (e.g., with images of products, as described above).

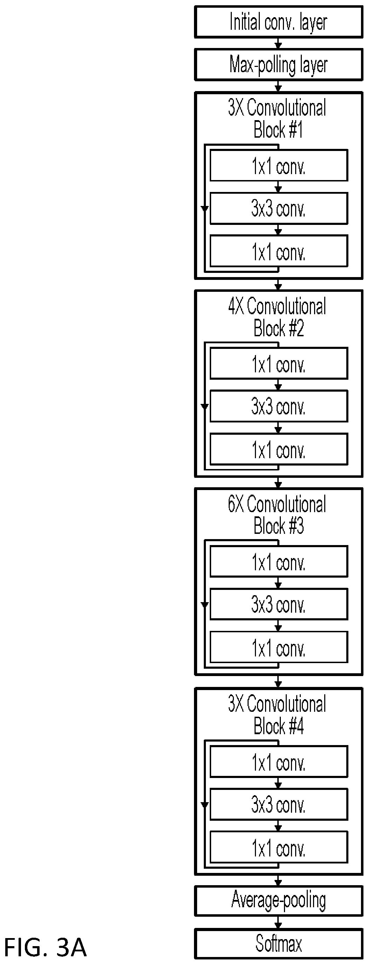

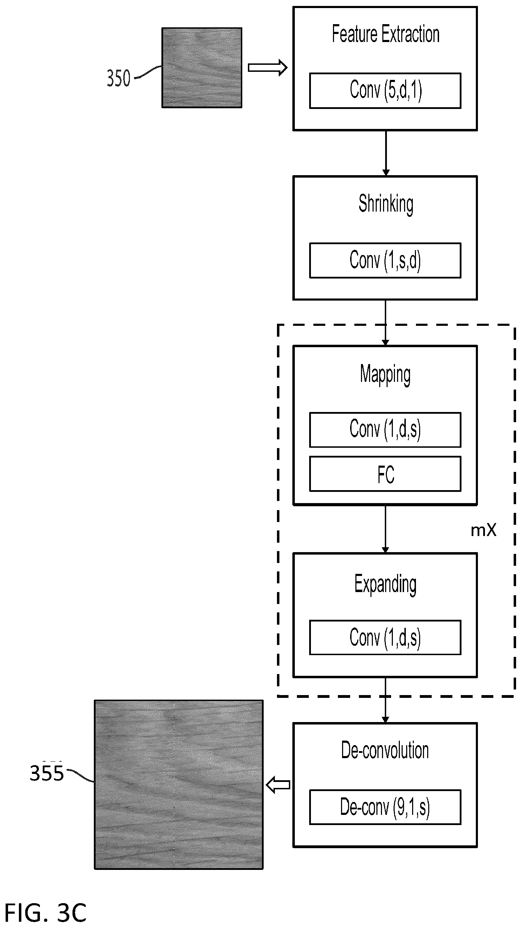

The teacher neural network of the classification student teacher neural network 205 may be a neural network as illustrated in FIG. 3A, which may be a ResNet50 neural network, and the student neural network may have the same structure. In FIG. 3A "3X", "4X" and the like (and "mX" in FIG. 3C) means that the corresponding blocks are repeated e.g., 3, 4, or m times (and connected in series) in the full pipeline/model (where m is a natural number). As mentioned above, the teacher network may be trained with labeled generic images. In some embodiments, a large dataset of generic images (e.g., ImageNet) may be used. During training of the teacher neural network, the images may be fed into the first (leftmost) layer of the teacher neural network, and an objective function that rewards similarity between (i) the output (e.g., a label, generated by the neural network, identifying a classification), for each image, of a classifier layer ((not shown), connected to the right-most layer shown in FIG. 3A) and (ii) the (ground truth) label of the image, may be used. Once training of the teacher neural network is complete, the student neural network may be trained as described above (using normal images and images containing simulated defects, and with an objective function that (i) when the training image is a normal image, rewards similarity between latent variables of the student neural network and corresponding latent variables of the teacher neural network, and (ii) when the training image is an image including simulated defects, rewards dissimilarity between latent variables of the student neural network and the corresponding latent variables of the teacher neural network).

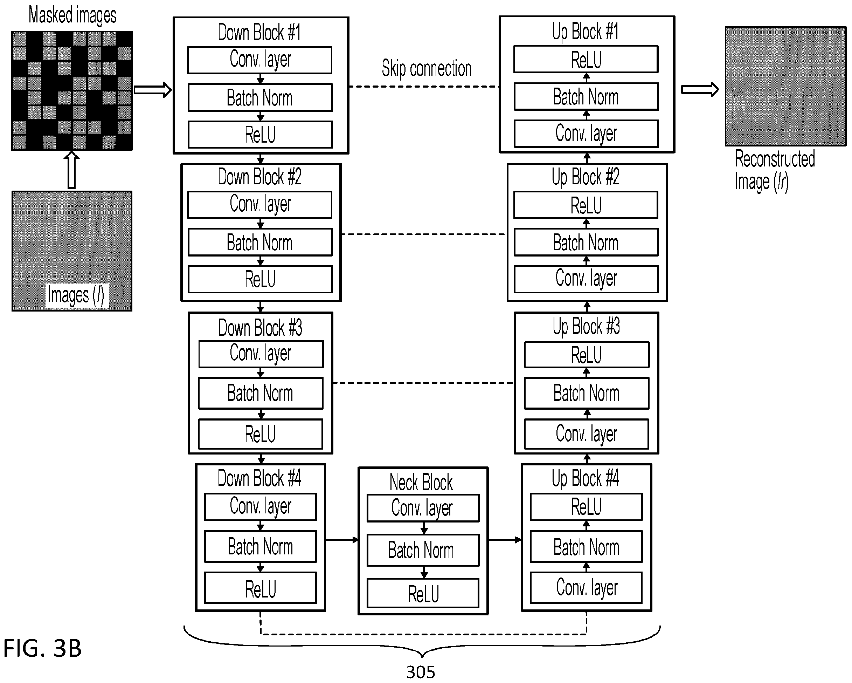

The teacher neural network (and the student neural network) of the reconstruction student teacher neural network 215 may each have the structure 305 illustrated in the middle of FIG. 3B; this portion of the drawing shows the type and size of each layer; it may be seen that in the middle of the neural network the layers are smaller (e.g., 16 x 16 artificial neurons) than at the input and at the output (where each layer may be 256 x 256 artificial neurons). The key, in FIG. 3, identifies elements that may be (i) convolutional neural networks ("Conv."), (ii) batch normalization operations ("BatchNorm"), (iii) rectified linear activation functions ("ReLu"), and (iv) concatenated skip-connections ("Skip, Concatenation"). The reconstruction teacher neural network may be trained with a plurality of masked images, and an objective function that rewards similarity between the output and the original (unmasked) version of the image used to create the masked image. Each masked image may be generated from a corresponding original (unmasked) image by masking off (e.g., setting to black) one or more regions in the image. For example, as illustrated in the top portion of FIG. 3B, the image (an image of a capsule in the example of FIG. 3B) may be divided into a grid of rectangles or squares (e.g., a 16 x 16 grid of squares, or an n x m grid of rectangles, with each of m and n being an integer greater than 1 and less than 64), and a fraction of the squares or rectangles may be selected at random and masked out, e.g., replaced with a black square or rectangle. During inference, the reconstruction teacher neural network may then fill in the masked out regions with squares or rectangles containing color approximating, to the extent the training of the neural network was effective, the color of the corresponding square or rectangle of the original (unmasked) image, to result in an image, for example, such as the reconstructed image at the bottom of FIG. 3B. Once training of the teacher neural network is complete, the student neural network may be trained as described above.

The teacher neural network of the super-resolution student teacher neural network 210 may be a neural network as illustrated in FIG. 3C, and the student neural network may have the same structure. The teacher neural network may receive a low-resolution input image 350 and generate, from it, a higher-resolution image 355. The neural network may have the structure shown (between the low-resolution input image 350 and the higher-resolution image 355) in FIG. 3C. The teacher neural network may be trained with a collection of original (full resolution) generic images, each of which may be converted to a reduced-resolution image and fed into the teacher neural network during training; the objective function may be selected to reward similarity between the original (full resolution) image and the output of the teacher neural network. Once training of the teacher neural network is complete, the student neural network may be trained as described above.

As mentioned above, during the training of each student neural network from a respective teacher neural network, a combination of normal images and images containing simulated defects may be employed as the training data set. Each normal image may be an image of the product (e.g., of the article being manufactured) that is thought to be defect-free, and each of the images containing simulated defects may be a modified version of a respective normal image, the normal image having been modified by the introduction of one or more defects into the image. As used herein, terms such as "introduction of defects" are used to describe any intentional degradation of the quality of an image, notwithstanding the fact that the defects introduced in such a process may not be discrete or countable.

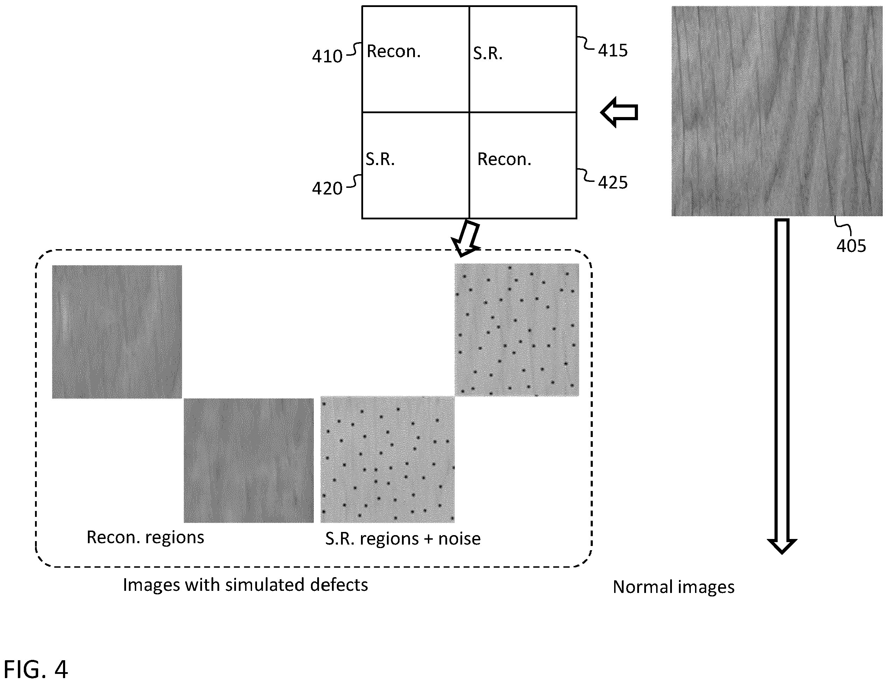

The generation of images containing simulated defects may proceed as illustrated in FIG. 4, which illustrates a method in which super-resolution and reconstruction neural networks are used to generate, from defect-free images, images including defects (for the training of the student neural networks). A normal image 405 is divided into four portions, a first (upper left) portion 410, a second (upper right) portion 415, a third (lower left) portion 420, and a fourth (lower right) portion 425 (the third portion being diagonally opposed to the second portion and the fourth portion being diagonally opposed to the first portion). In the example of FIG. 4 (and in FIG. 5), the normal image is an image of a board (e.g., a board intended for use in fabricating furniture or flooring, in which aesthetic defects may be important). In each of the first portion 410 and the fourth portion 425, defects may be introduced by adding noise and processing the resulting noisy image with a super-resolution ("S.R.") neural network. In each of the second portion 415 and the third portion 420, defects may be introduced by masking out portions of the image and processing the resulting image using a reconstruction ("Recon.") neural network (the defects being the result of the reconstruction neural network's imperfect ability to reconstruct the lost portions of the image). In some embodiments the normal image instead has defects introduced over the entire image using only one process, or defects are introduced into only some of the portions (e.g., using one of the two methods for introducing defects described above).

FIG. 5 shows the neural network for defect detection 510 in operation, performing defect detection. As illustrated, this neural network 510 may include (as also illustrated in FIGs. 2A and 2B) a plurality of (e.g., three) student-teacher neural networks. A product image (e.g., a normal image/sample, or an "anomaly sample" (an image showing one or more defects)) is fed into the neural network 510. In the neural network 510, the product image is fed into each of the three student teacher neural networks 205, 210, 215 in FIGs. 2A and 2B, and in each of the student teacher neural networks, a respective measure of the difference between a latent feature vector of the student neural network and a corresponding latent feature vector of the teacher neural network is calculated. The respective measures of the differences are combined, or "fused", e.g., by taking the minimum of the measures of the differences, or the mean of the measures of the differences, and the result is used (e.g., by comparing it to a threshold) to make a decision regarding whether the image shows a defect. In cases in which a defect is detected, the neural network 510 may also produce an annotated copy of the product image, the annotated copy including markings showing the region or regions in which defects have been detected, and (e.g., using suitable color annotations) the severity of the defects (which may be assessed based on the magnitudes of the differences between the latent feature vectors of the student neural network and the teacher neural network).

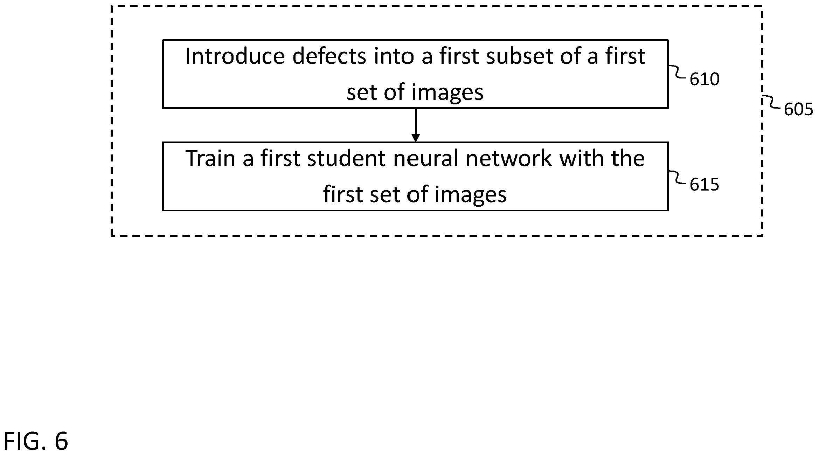

FIG. 6 is a flowchart of a method, in some embodiments. The method may include training, at 605, a first neural network including a first student neural network and a first teacher neural network. The training of the first network may include introducing, at 610, defects into a first subset of the first set of images; and training, at 615, the first student neural network with the first set of images. The training of the first student neural network may include training the first student neural network with a first objective function, that (i) for an image of the first set and not of the first subset, rewards similarity between a feature map of the first student neural network and a feature map of the first teacher neural network, and (ii) for an image of the first subset, rewards dissimilarity between a feature map of the first student neural network and a feature map of the first teacher neural network.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, the term "or" should be interpreted as "and/or", such that, for example, "A or B" means any one of "A" or "B" or "A and B". As used herein, the term "rectangle" includes a square as a special case, i.e., a square is an example of a rectangle, and the term "rectangular" encompasses the adjective "square". As used herein, determining that a measure of difference between two quantities exceeds (or is less than) a threshold encompasses, as an equivalent operation, determining that a measure of similarity between the two quantities is less than (or exceeds) a threshold.

Each of the neural networks described herein may be implemented in a respective processing circuit or in a respective means for processing (or more than one neural network, or all of the neural networks described herein may be implemented together in a single processing circuit or in a single means for processing, or a single neural network may be implemented across a plurality of processing circuits or means for processing). Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, the term "array" refers to an ordered set of numbers regardless of how stored (e.g., whether stored in consecutive memory locations, or in a linked list).

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although embodiments of a system and method for defect detection have been specifically described and illustrated herein, many modifications and variations will be apparent to those skilled in the art. Accordingly, it is to be understood that a system and method for defect detection constructed according to principles of this disclosure may be embodied other than as specifically described herein. The invention is also defined in the following claims, and equivalents thereof.

## Claims

1. A computer-implemented method, comprising:
training a first neural network with a first set of images,
wherein:
the first neural network comprises:
a first student neural network, and
a first teacher neural network;
the training of the first neural network with the first set of images comprises:
introducing defects into a first subset of the first set of images, and
training the first student neural network with the first set of images; and
the training of the first student neural network comprises training the first student neural network with a first objective function, that:
for an image of the first set and not of the first subset, rewards similarity between a feature map of the first student neural network and a feature map of the first teacher neural network, and
for an image of the first subset, rewards dissimilarity between a feature map of the first student neural network and a feature map of the first teacher neural network.

2. The method of claim 1, further comprising training the first teacher neural network with a second set of images and a first teacher objective function, wherein:
the second set of images comprises images each labeled with a classification label; and
the first teacher objective function rewards, for each image, similarity between a classification generated by the first teacher neural network and the classification label of the image.

3. The method of claim 1 or claim 2, wherein the first neural network further comprises:
a second student neural network, and
a second teacher neural network.

4. The method of claim 3, further comprising training the second student neural network with the first set of images and the first objective function.

5. The method of claim 3 or claim 4, further comprising training the second teacher neural network with a second set of images and a second teacher objective function, wherein:
the second set of images comprises masked generic images and the second teacher objective function rewards, for each masked generic image, similarity between an output image generated by the second teacher neural network and an original generic image corresponding to the masked generic image; or
the second set of images comprises reduced-resolution generic images and the second teacher objective function rewards, for each reduced-resolution generic image, similarity between an output image generated by the second teacher neural network and a full-resolution image corresponding to the reduced-resolution generic image.

6. The method of claim 3 or claim 4, wherein the first neural network further comprises:
a third student neural network, and
a third teacher neural network.

7. The method of claim 6, further comprising training the third teacher neural network with a third set of images and a third teacher objective function, wherein:
the second set of images comprises masked generic images and the second teacher objective function rewards, for each masked generic image, similarity between an output image generated by the second teacher neural network and an original generic image corresponding to the masked generic image; and
the third set of images comprises masked generic images and the third teacher objective function rewards, for each masked generic image, similarity between an output image generated by the third teacher neural network and an original generic image corresponding to the masked generic image.

8. The method of claim 7, further comprising training the third student neural network with the first set of images and the first objective function.

9. The method of any preceding claim, wherein:
a first image of the first subset comprises a first portion, processed by a reconstruction neural network.

10. The method of claim 9, further comprising generating the first portion, the generating of the first portion comprising:
masking out a portion of a normal image to form a masked image; and
feeding the masked image to the reconstruction neural network, to form the first portion as an output of the reconstruction neural network.

11. The method of claim 9 or claim 10, wherein the first image further comprises a second portion, processed by a super-resolution neural network.

12. The method of claim 11, further comprising generating the second portion, the generating of the second portion comprising:
adding noise to a portion of a normal image to form a noisy image; and
feeding the noisy image to the super-resolution neural network, to form the second portion as an output of the super-resolution neural network.

13. The method of claim 11 or claim 12, wherein:
the first image further comprises:
a third portion, processed by a super-resolution neural network, and
a fourth portion, processed by a reconstruction neural network, wherein the third portion is diagonally opposed to the second portion, and wherein the fourth portion is diagonally opposed to the first portion.

14. The method of any preceding claim, further comprising:
classifying, by the first neural network, a product image of an article in a manufacturing process as including a defect; and
removing the article from the manufacturing process.

15. The method of claim 14, wherein the classifying of the product image as including a defect comprises:
feeding the product image to the first student neural network and to the first teacher neural network; and
determining that a measure of the difference between a latent feature vector of the first student neural network and a corresponding latent feature vector of the first teacher neural network exceeds a threshold.

16. The method of claim 15, wherein the measure of the difference is an L2 norm of the difference.

17. The method of any of claims 14-16, wherein the product image is an image of a display panel in a manufacturing flow.

18. A system comprising:
a processing circuit configured to train a first neural network with a first set of images,
wherein:
the first neural network comprises:
a first student neural network, and
a first teacher neural network;
the training of the first neural network with the first set of images comprises:
introducing defects into a first subset of the first set of images, and
training the first student neural network with the first set of images;
and
the training of the first student neural network comprises training the first student neural network with a first objective function, that:
for an image of the first set and not of the first subset, rewards similarity between a feature map of the first student neural network and a feature map of the first teacher neural network, and
for an image of the first subset, rewards dissimilarity between a feature map of the first student neural network and a feature map of the first teacher neural network.
